Europäisches Patentamt

European Patent Office

Office européen des brevets

(11) Publication number: **0 210 726**
**A1**

(12) # EUROPEAN PATENT APPLICATION

(21) Application number: **86304104.2**

(22) Date of filing: **29.05.86**

(51) Int. Cl.⁴: **C 08 J 5/18**
**C 08 L 23/20**
**//(C08L23/20, 23:12)**

(30) Priority: **30.05.85 US 739571**

(43) Date of publication of application:
**04.02.87 Bulletin 87/6**

(84) Designated Contracting States:
**AT BE CH DE FR GB IT LI LU NL SE**

(71) Applicant: **SHELL OIL COMPANY**
**900, Louisiana**
**Houston Texas 77001(US)**

(72) Inventor: **Hwo, Charles Chiu-Hsiung**
**2710 Sugarwood Drive**
**Sugarland, Texas(US)**

(74) Representative: **Myerscough, Philip Boyd et al,**
**J.A.Kemp & Co. 14, South Square Gray's Inn**
**London, WC1R 5EU(GB)**

(54) **Process for making a film for food wrap.**

(57) A thermoplastic film for food wrap which possesses high clarity is made by melt casting a blend of either polybutene-1 or a butene-propylene copolymer and polypropylene in contact with a cold medium for a sufficient period of time to achieve desirable deadfold or cling characteristics.

Croydon Printing Company Ltd.

## PROCESS FOR MAKING A FILM FOR FOOD WRAP

The present invention relates generally to a process for making improved film for food wrap.

Various films and wraps have been developed over the years for use as food wraps, for example, for wrapping meats in the butcher department or vegetables in the produce department of supermarkets. Many wrappings need to be heat sealed prior to storage. The film needs to cling enough to allow heat sealing around the food and the package. It is preferred to avoid heat sealing for some foods.

Plasticized polyvinyl chloride (PVC) has been widely used as an overwrap for fresh meat due to its self cling or "deadfold" properties, stretch characteristics, heat seal, optical clarity, oxygen permeability and toughness. However, PVC has a higher sealing temperature than that which is desired, has a relatively short meat color retention time and a relatively low puncture resistance. PVC has a higher density than what is desirable. Thus, more material is required due to the higher density. Also, PVC has a potential toxicity problem since it contains plasticizers such as Di(2-ethylphenyl) phthalate in it (see "Plasticizer Scrutinized for Possible Health Risks", page 1 Chemical and Engineering News, February 28, 1983).

Low density polyethylene (LDPE) has poor deadfold during packaging and microwaving. See US-A-4367,256 which discloses the use of, as a clinging agent, glycerol mono-oleate (Column 4 lines 38-19).

Likewise, ethylene vinyl acetate (EVA) is not suited to the use as overwrap film due to EVA's poor deadfold. See US-A-4,430,457 which discloses the use, as a clinging agent, of low density amorphous copolymer of ethylene and propylene. Saran(a copolymer of vinyl chloride and vinylidene chloride) also has a potential toxicity problem and tears during microwaving, while polypropylene (PP) has poor deadfold.

US-A-3,754,063 discloses a heat shrinking plastic packaging film with an outer layer which contains polypropylene and polybutene-1. This plastic film shrinks upon warming and has high tear and burst resistance.

US-A-3,808,304 discloses a process for heat sealing and heat shrinking isotactic polypropylene by blending isotactic polypropylene with polybutene-1 and forming a film by extruding the blend. The film is then water quenched within 61cm (two feet) of the extrusion die and biaxially oriented and heated to seal and shrink the film.

A material for use in films or wraps should have the following properties:

(1) The film should have good stretch characteristics-- stretch characteristics include high elongation at thin gauge [normally 0.65-0.75 mil (16-19 micrometers)] and stretch recovery or elasticity that eliminates wrinkles and finger indentations.

*(2) The material should possess high clarity.

(3)  The material should be able to be heat sealed easily. The heat seal is made by sealing the layers of film on the underside of the packaged tray by use of heat.

*(4) The material should have good "deadfold."  Deadfold is defined as the amount of cling or adherence the film or wrap of the material has to itself.

(5)  The material should have high oxygen permeability. This is required to retain the appearance of freshness of a food such as meat produce.

(6)  The material should be tough to withstand handling and burn through during the heat sealing operation.

(7)  The material should be of low cost while maintaining adequate performance.

(8)  The material should be biologically inert (non-toxic) and contain no plasticizers or other nonpolymer components in major amounts.  The material should contain a minimum of additives such as stabilizers and lubricants, and should not contain exudable or migratory ingredients under fabrication, sterilization, storage or use conditions.

The invention provides a process for making a thermoplastic film for food wrap which comprises melt casting onto a cold medium for at least six seconds a blend of from 50 to 80% by weight of (a) a butene-1 homopolymer or a butene-1-propylene copolymer having a propylene content of from 15 to 25 mole % and from 50 to 20% by weight of (b) a propylene homopolymer.

The resulting film is suitable for use as a wrap for enclosing food articles such as meat, poultry, cheese, fruits and vegetables and has all of the above properties, and which particularly possesses high clarity and good deadfold (cling). The film is made by melt casting the blend at slow speeds in contact with a cold medium such as a chill roll or cool water for sufficient time to achieve the desirable deadfold or cling characteristics. The film will heat seal easily but need not be heat sealed.

The blend used in the process of the present invention comprises from 50 to 80%, preferably 65 to 80%, more preferably 65 to 75%, by weight of (a) and a complementary amount, to make 100% by weight of (a) and (b), of the propylene homopolymer (b). Particularly preferred blends comprise about 70% by weight butene-1 homopolymer and about 30% by weight propylene homopolymers or about 75% by weight butene-1-propylene copolymer (preferably $C_3$ = about 17 mole %) and about 25% by weight polypropylene.

The polymers (a) and (b) can be blended together in the form of pellets and then suitably are cast into a film thickness of approximately 18μm (0.0007 inch on chill rolls at speeds of about 6m/min (20 ft/min). The blend is melt cast in contact with some kind of a cold medium such as a chill roll or cool water in time to achieve the desirable deadfold or cling characteristics to make the film useful for food wrap. The water temperature of a chill roll is preferably 14.4 to 15.6°C (58 to 60°F). The contact time of extrudate with cooling media should be six seconds or more. Any lesser period will generate larger and more crystals resulting in less clarity and deadfold. The distance between the exit of the extrudate from the die face and cooling media such as the chill roll should desirably be 1.3 cm (0.5 inch) or less.

Suitable fabrication conditions for polybutylene cast film are:

1. Film gauge: 13 to 20µm (0.5-0.8 mil)

2. Melt temperature: 230 to 260°C (450 to 500°F)

3. Extruder temperature at mixing zone: 230 to 243°C (450 to 470°F)

4. Chill roll or water bed temperature: 10 to 16°C (50 to 60°F)

5. Minimum contact time of extrudate with cooling media: six seconds or more

6. Distance between Die Face and cooling media: 1.3 cm (0.5 inch) or less

7. Screw length to diameter ratio: 18 to 24: 1

8. Die Gap: 380µm (15 mil)

9. Good mixing screw such as dumalge or mixing head is recommended.

TABLE 1

0210726

| | PVC FILM[1] (13 μm or 0.5 mil) | WBS-173[2] (18 μm or 0.7 mil | WBS-244[3] (18 μm or 0.7 mil) | WBS-209[4] (18 μm or 0.7 mil) |
|---|---|---|---|---|
| $O_2$ PERMEABILITY RATE, $CC/24\ HR/645\ cm^2$ @ 23°C, 95-100% RH | 666 | 444 | 500 | 870 |
| MVTR. $g/24\ HR/645cm^2$ @ 23°C, 90-95% RH | 10.8 | 2.0 | 1.8 | 0.93 |
| DEGREE OF DEAD FOLD* | 5 | 4 | 3.5 | 6 |
| HAZE, % (ASTM D 2457) | 0.6 | 0.8 | 0.8 | 1.2 |
| CLARITY (ASTM D 1003) | 83 | 34 | 54 | 57 |
| GLOSS (45°) 1% STANDARD (ASTM D 1003) | 90 | 85 | 82 | 82 |
| DENSITY, $G/cm^3$ | 1.23 | 0.91 | 0.91 | 0.90 |

*QUALITATIVE INFORMATION, HIGHER NUMBER IS BETTER

1)       Commercial film from Sysco Corporation, Houston, Texas

2)       A blend of PB0200 plus 35% by weight PP5520

3)       A blend of PB0200 plus 20% by weight PP5520

4)       A blend of Butene-1-propylene copolymer ($C_3$ = 17 mole %; M.I. = 1.3) plus 25% by weight PP5083.

Table 1 gives physical and optical properties of commercial PVC vinyl film available from Sysco Corporation, Houston, Texas. This film was 13μm (0.5 mil) thick. It was compared with WBS-173--a blend of PB 0200 polybutylene homopolymer plus 35% by weight PP 5520 polypropylene homopolymer; WBS-244 -- a blend of PB 0200 plus the lower limit of polypropylene--20% by weight PP 5520 propylene homopolymer;

WBS-209 -- a blend of butene-1-propylene copolymer ($C_3$ = 17 mole %, 1.3 MI) plus 25% by weight PP 5083 propylene homopolymer.

Deadfold was determined by hand crinkling a 10cm (4 inch) square standard size piece of film and observing the relative degree of unfolding and expansion. The higher the number the better the deadfold. Comparisons in Table 1 also included oxygen permeability rate, haze, clarity, and gloss. It may be seen from Table 1 that the degree of deadfold for WBS-209 is better than that of the PVC film. In addition, the deadfold for the other two WBS films was acceptable. Haze was improved additionally. Clarity was not as good as for the PVC film; however, the clarity for the WBS films was acceptable. Gloss was comparable with the PVC film.

The mechanical properties of PVC food overwrap and polybutylene film may be compared in Table 2. The tensile break strength and puncture resistance are better for the polybutylene film as well as tear values and modulus. Elongation was at least as good, or better, and tear values were increased. Impact and coefficient of friction values for this application are satisfactory.

Suitable fabrication conditions for polybutylene cast film are:

1.  Film gauge: 13 to 20µm (0.5-0.8 mil)

2.  Melt temperature: 230 to 260°C (450 to 500°F)

3.  Extruder temperature at mixing zone: 230 to 243°C (450 to 470°F)

4.   Chill roll or water bed temperature: 10 to 16°C (50 to 60°F)

5.   Minimum contact time of extrudate with cooling media: six seconds or more

6.   Distance between Die Face and cooling media: 1.3 cm (0.5 inch) or less

7.   Screw length to diameter ratio: 18 to 24: 1

8.   Die Gap: 380um (15 mil)

9.   Good mixing screw such as dumalge or mixing head is recommended.

TABLE 2

| | PVC FILM[1] (13 µm) | WBS-173[2] (15 µm or 0.6 mil) | WBS-244[3] (18 µm) | WBS-209[4] (18 µm) |
|---|---|---|---|---|
| PUNCTURE RESISTANCE, J/cm (IN. LB/MIL)(1.3cm DIA. HEAD, 51 cm/MIN) | 531(11.8) | 756(16.8) | 603(13.4) | 169(3.75) |
| TENSILE BREAK STRENGTH (MD), MPa (PSI) (ASTM D 882) | 24.1(3490) | 25.4(3680) | 28.3(4100) | 21.2(3070) |
| ELONGATION, % AT BREAK (ASTM D 882) | 190 | 173 | 128 | 193 |
| YIELD STRENGTH, MPa (PSI) (ASTM D 882) | --- | 12.4(1800) | 13.3(1930) | 9.52(1380) |
| ELMENDORF TEAR, G/25.4 µm (ASTM D 1922) | 4.1 | 14.3 | 27 | 22 |
| SPENCER IMPACT, J/cm (IN-POUND/MIL) (ASTM D 3420 METHOD B) | 414(9.2) | 149(3.3) | 257(5.7) | 114(2.54) |
| COEFFICIENT OF FRICTION (METAL TO FILM ASTM D1894) | 0.36 | 0.64 | 0.72 | --- |
| SECANT MODULUS AT 50% | 3950 | --- | 4610 | --- |
| 100% | 2465 | --- | 2910 | --- |

*QUALITATIVE INFORMATION, HIGHER NUMBER IS BETTER

1) Commercial film from Sysco Corporation, Houston, Texas

2) A blend of PB0200 plus 35% by weight PP5520

3) A blend of PB0200 plus 20% by weight PP5520

4) A blend of Butene-1-propylene copolymer ($C_3$ = 17 mole %; M.I. = 1.3) plus 25% by weight PP5083.

0210726

## TABLE 3

### COMPARISON OF THERMAL PROPERTIES OF THIN FILMS

|  | WBS-173[1] | Dow Saran | Shell PP5051 | Glad PE | Vinyl[2] | Dow LLDPE |
|---|---|---|---|---|---|---|
| Film Gauge, (mil) μm | 18(0.7) | 13(0.5) | 25(1.0) | 13(0.5) | 18(0.7) | 28(1.1) |
| Heat Seal Initiation Temp., °C[3] (°F) | 102(215) | 149(300) | 154(310) | 113(235) | 121(250) | 110(230) |
| Sealing Temp. Range, °C[3] (°F) | 102-129 (215-265) | 149-166 (300-330) | 154-166 (310-330) | 113-141 (235-285) | 121-160 (250-320) | 110-129 (230-265) |
| Saging Temp., °C[4] (°F) | 149(300) | 170(338)[5] | 164(328) | 116(240) | 160(320) | 126(258) |
| Melting Point, °C(°F) | 121, 163 (250,325) | 150(302) | 168(334) | 104(220) | None | 120(248) |

1. A blend of 65% PP0200 plus 35%w PP5520.

2. Commercial film from Sysco Corp., Houston, Texas.

3. Sealing conditions: 2 sec dwell, 0.14 MPa (20 psi) pressure, 2-side heated and 1-side with "Teflon" cloth.

4. With load of one penny ($\approx$2.5g) on 7.6 cm (3 inch) diameter supported film.

5. Film tore easily during testing.

Table 3 shows a comparison of the thermal properties of various thin films. WBS173, a blend of 65% polybutylene (PBO200) plus 35% by weight polypropylene 5520 was compared to Saran of Dow Chemical Company, Polypropylene PP5051 of Shell, Glad PE of Union Carbide, Vinyl from Sysco and LLDPE from Dow. It should be noted that the heat sealing initiation temperature for WBS 173 was lower than any of the other heat seal initiation temperatures. In addition, the lower range of the sealing temperature for WBS173 was the lowest of the six films. The saging temperature is a temperature comparable to microwaving temperature. The Dow Saran film tore during the testing. The Glad PE and Dow LLDPE had lower saging temperatures than WBS173.

## CLAIMS

1. A process for making a thermoplastic film for food wrap which comprises melt casting onto a cold medium for at least six seconds a blend of from 50 to 80% by weight of (a) a butene-1 homopolymer or a butene-1-propylene copolymer having a propylene content of from 15 to 25 mole % and from 50 to 20% by weight of (b) a propylene homopolymer.

2. A process according to claim 1, wherein said blend comprises from 65 to 80% by weight of (a) and from 35 to 20% by weight of (b).

3. A process according to claim 1 or 2, wherein said blend is melt cast in contact with a cold medium for at least eight seconds.

4. A process according to any one of the preceding claims wherein (a) is a butene-1-propylene copolymer having a propylene content of from 15 to 20 mole %.

5. A process according to claim 4 wherein the blend comprises about 75% by weight of (a) having a propylene content of about 17 mole %, and about 25% by weight of (b).

6. A process according to claim 1, 2 or 3 wherein the blend comprises about 70% by weight of a butene-1 homopolymer as (a) and about 30% by weight of (b).

European Patent Office

**EUROPEAN SEARCH REPORT**

Application number

EP 86 30 4104

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-A-1 938 913 (CHEMISCHE WERKE HÜLS) * Claim 1; page 1, line 1 - page 3, line 4 * | 1-6 | C 08 J 5/18 C 08 L 23/20 (C 08 L 23/20 C 08 L 23:12 ) |
| | --- | | |
| X | DE-B-2 234 103 (CHEMISCHE WERKE HÜLS) * Claim 1; column 1, line 52 - column 3, line 3 * | 1-6 | |
| | --- | | |
| X | FR-A-2 314 211 (IMPERIAL CHEMICAL INDUSTRIES) * Claims 1-7 * | 1-6 | |
| | ----- | | TECHNICAL FIELDS SEARCHED (Int Cl 4) |
| | | | C 08 J C 08 L |

The present search report has been drawn up for all claims

| Place of search | Date of completion of the search | Examiner |
|---|---|---|
| THE HAGUE | 07-11-1986 | GOOVAERTS R.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82